**Europäisches Patentamt**

**European Patent Office**

**Office européen des brevets**

(19)

(11) Veröffentlichungsnummer : **0 552 173 B1**

(12) **EUROPÄISCHE PATENTSCHRIFT**

(45) Veröffentlichungstag der Patentschrift :
01.02.95 Patentblatt 95/05

(51) Int. Cl.$^6$ : **G01F 1/68**

(21) Anmeldenummer : **91916300.6**

(22) Anmeldetag : **18.09.91**

(86) Internationale Anmeldenummer :
**PCT/DE91/00740**

(87) Internationale Veröffentlichungsnummer :
**WO 92/07237 30.04.92 Gazette 92/10**

(54) **VERFAHREN ZUR BESTIMMUNG EINES FLUIDDURCHSATZES.**

(30) Priorität : **12.10.90 DE 4032422**
**28.12.90 DE 4042150**

(43) Veröffentlichungstag der Anmeldung :
**28.07.93 Patentblatt 93/30**

(45) Bekanntmachung des Hinweises auf die
Patenterteilung :
**01.02.95 Patentblatt 95/05**

(84) Benannte Vertragsstaaten :
**DE FR GB IT SE**

(56) Entgegenhaltungen :
**EP-A- 0 144 027**
**DE-A- 3 433 368**
**DE-A- 4 004 552**

(73) Patentinhaber : **ROBERT BOSCH GMBH**
**Postfach 30 02 20**
**D-70442 Stuttgart (DE)**

(72) Erfinder : **STEINBRENNER, Ulrich**
**Aspenwaldstr. 38**
**D-7000 Stuttgart 1 (DE)**
Erfinder : **ROSENAU, Willi**
**Backnanger Weg 5**
**D-7146 Tamm (DE)**
Erfinder : **WAGNER, Wolfgang**
**Hindenburgstr. 46**
**D-7015 Korntal-Münchingen (DE)**
Erfinder : **NEUBERT, Juergen**
**Stedinger Str. 4**
**D-7000 Stuttgart 31 (DE)**
Erfinder : **PFLIEGER, Helmut**
**Gruppenbacher Str. 41**
**D-7100 Heilbronn (DE)**

**EP 0 552 173 B1**

## Beschreibung

Stand der Technik

Die Erfindung betrifft ein Verfahren zur Bestimmung des Durchsatzes eines Fluids, insbesondere eines Luftmassenstroms einer Brennkraftmaschine, wobei ein temperaturabhängiger Widerstand in dem Fluidströmungsweg angeordnet wird, die Größe des Heizstromes ein Maß für den Fluiddurchsatz ist und die Temperatur des Widerstandes von einem Temperatursensor ermittelt und mittels einer den Heizstrom beeinflussenden Schaltungsanordnung auf einen konstanten Wert eingestellt wird. Ein derartiges Verfahren ist aus DE-A1-3 433 368 bekannt. Dabei wird die der Brennkraftmaschine zugeführte Luftmasse ermittelt, wobei der ermittelte Wert einem Steuergerät zur Beeinflussung der Betriebsparameter der Brennkraftmaschine zugeleitet wird. Bekannt ist es, hierzu einen sogenannten Hitzdraht- oder Heißfilm-Luftmassenmesser einzusetzen. Beim Hitzdraht-Luftmassenmesser wird der Ansaugluftstrom an einem beheizten Draht (Hitzdraht) vorbeigeleitet. Dieser Draht ist Teil einer elektrischen Brückenschaltung. Er stellt den bereits erwähnten temperaturabhängigen, von einem Heizstrom durchflossenen Widerstand dar. Durch den Heizstrom wird der Hitzdraht auf eine konstante Übertemperatur zur Ansauglufttemperatur gehalten. Der benötigte Heizstrom ist ein Maß für die vom Motor angesaugte Luftmasse. Er wird in ein Spannungssignal umgewandelt, das vom Steuergerät als eine wichtige Eingangsgröße neben der Drehzahl verarbeitet wird. Ein im Hitzdraht-Luftmassenmesser eingebauter Temperaturfühler -dies ist der bereits erwähnte Temperatursensor- sorgt dafür, daß das Ausgangssignal nicht von der Ansauglufttemperatur abhängig ist. Ferner dient er dazu, den vom Heizstrom durchflossenen Widerstand auf der konstanten Übertemperatur zu halten. Einen entsprechenden Aufbau besitzt ein Heißfilm-Luftmassenmesser. Anstelle des Hitzdrahts kommt ein filmartiger Widerstand zum Einsatz.

Aus dem US-Patent 4,658,641 ist ein Verfahren zur Bestimmung des Durchsatzes eines Fluids bekannt, das zur Ermittlung der Luftmasse bei einer Verbrennungsmaschine verwendet wird. Um zu verhindern, daß sich der temperaturabhängige Widerstand bei abgeschalteter Luftströmung (im Stillstand der Brennkraftmaschine) zu stark erwärmt, wird der Heizstrom abgeschaltet, sobald der Luftdurchsatz einen bestimmten Schwellenwert unterschreitet.

Aus EP-A3-0 144 027 ist eine Einrichtung für die Messung der angesaugten Luftmasse bei einer Brennkraftmaschine bekannt, die eine Brückenschaltung aufweist. Die Brückenschaltung umfaßt einen heizbaren Widerstand im Ansaugpfad der Brennkraftmaschine, einen Widerstand für die Messung der Temperatur der angesaugten Luft, sowie weitere Brückenwiderstände. Ein Heizstrom wird der Brückenschaltung über einen Transistor zugeführt, der periodisch von einem Signal angesteuert wird, das von einem Mikrocomputer erzeugt wird. Ein Signal, das die Temperaturänderung des durch einen Heizstrom aufheizbaren Widerstands repräsentiert, wird durch den Mikrocomputer erfaßt. Es wird ein erstes Korrektursignal aus der Differenz zwischen dem von dem Mikrocomputer erfaßten Wert und einem Signal ermittelt, daß die Temperatur des heizbaren Widerstandes bei Normaltemperatur uund Brückengleichgewicht berücksichtigt. Ein die Zeitdauer des Steuersignals beeinflussender Korrekturwert wird in Abhängigkeit von dem ersten Korrektursignal mit Hilfe einer Tabelle ermittelt. Dieses zweite Korrektursignal wird für die Korrektur der Dauer des Stromdurchgangs verwendet.

Aus DE-A1-4 004 552 ist weiter ein Signalverarbeitungsverfahren für einen Durchflußsensor vom thermischen Typ bekannt, der einen Widerstand mit Temperaturabhängigkeit aufweist. Wenn der Fluiddurchfluß im stationären Zustand, also dem sogenannten Gleichgewichtszustand ist, werden folgende Schritte bei diesem Signalverarbeitungverfahren durchgeführt: Setzen im voraus die Beziehung einen dem Durchfluß zugeordneten Wert, der gemäß der Durchflußänderung sich ändert, und gemäß eines ersten Betriebswertes, der die Temperaturcharakteristik des den temperaturabhängigen Widerstand tragenden Trägerteils angibt, die bzw. der sich in Abhängigkeit ändert, um einen dem Durchfluß zugeordneten Wert als Parameter zu erzeugen; Berechnen des ersten Betriebsparameters aus einem dem Durchfluß zugeordneten Wert, wenn der Durchfluß in Übereinstimmung mit der vorgegebenen Beziehung detektiert wird. Vergleichen des berechneten, ersten Betriebswertes mit dem zweiten Betriebswert, der in Beziehung mit dem ersten Betriebswert gesetzt wird. Korrigieren des zweiten Betriebswertes so, daß er dem ersten Betriebswert gemäß dem Vergleichsergebnis angenähert werden kann. Berechnen eines Kompensationsfaktors durch eine vorgegebene Berechnungsformel mit dem berechneten, ersten Betriebswert und dem korrigierten, zweiten Betriebswert und kompensieren des Kompensationsfaktors vermittels einer Multiplikation.

Vorteile der Erfindung

Das erfindungsgemäße Verfahren mit den im Hauptanspruch genannten Merkmalen hat demgegenüber den Vorteil, daß eine besonders hohe Meßgenauigkeit erzielt wird, da Fehler, die sich aufgrund der Trägheit beim Wärmeübergang, z.B. auf dem Meßsubstrat sowie vom temperaturabhängigen Widerstand zu dem Temperatursensor, einstellen, eliminiert werden. Hierzu wird zum Ausgleich eines bei eingeschaltetem Heizstrom jedoch noch nicht strömendem Fluid durch Temperaturüberhöhung des Widerstands auftretenden Meßfehlers der unmittelbar nach Beginn der Fluidströmung ermittelte Fluiddurchsatz mittels eines Korrekturwerts berichtigt. Betrachtet man zum Beispiel einen Hitzdraht-Luftmassenmesser oder einen Heißfilm-Luftmassenmesser einer Brennkraftmaschine, so wird vor dem Start der Brennkraftmaschine durch Einschalten der Zündung die Spannungsversorgung zum Luftmassenmesser eingeschaltet. Dieses Einschalten der Betriebsspannung führt zu einer unerwünschten Temperaturverteilung im Luftmassenmesser, woraus Meßfehler resultieren. Bei nichtströmendem Fluid, also abgeschaltetem Luftmassenstrom, erreicht der temperaturabhängige Widerstand und damit ein mit diesem verbundener Sensorplattenbereich eine höhere Temperatur im Vergleich zu der Temperatur der Sensorplatte bei vorliegendem Luftmassenstrom. An der Sensorplatte ist auch der bereits erwähnte Temperatursensor angeordnet, wobei überdies auch zwischen dem temperaturabhängigen Widerstand und dem Temperatursensor ein Wärmeübergangswiderstand besteht, so daß erst nach einer gewissen Zeitkonstante ein Temperaturausgleich erfolgen kann. Hieraus resultiert insgesamt, daß mit Beginn der Anströmung des Luftmassenmessers beim Start der Verbrennungsmaschine aufgrund des erst noch erfolgenden Temperaturausgleiches eine zu geringe Luftmasse gemessen wird. Dieser Meßfehler wird erfindungsgemäß beseitigt, indem der ermittelte Meßwert mit dem Korrekturwert berichtigt wird.

Vorzugsweise ist vorgesehen, daß als Korrekturwert ein Korrekturfaktor verwendet wird und daß mit diesem Korrekturfaktor der gemessen Fluiddurchsatz zum Erhalt eines korrigierten Fluiddurchsatzes multipliziert wird.

Da der Meßfehler nur dann auftritt, wenn zwischen der Inbetriebnahme des Hitzdraht-Luftmassenmessers, also dem Einschalten des Heizstroms, und der Inbetriebnahme der Brennkraftmaschine eine bestimmte Zeit vergeht, ist vorzugsweise vorgesehen, daß die Korrektur stets nur dann erfolgt, wenn nach dem Einschalten des Heizstroms eine vorgegebene Mindestzeit vergangen ist.

Der auftretende Meßfehler ist ferner davon abhängig, welche Zeit zwischen der Einschaltung der Zündung, also dem Einschalten des Heizstroms und dem Start der Brennkraftmaschine vergeht. Hierbei sei angenommen, daß die Mindestzeit auf jeden Fall abgelaufen ist. Die Größe des Korrekturwertes wird -bis zum Ablauf einer maximalen Zeitspanne- unter den vorstehend genannten Bedingungen in Abhängigkeit von der ohne Fluidströmung vergangenen Betriebszeit des Heizwiderstandes vergrößert.

Insbesondere ist vorgesehen, daß für ohne Fluidströmung vorliegende Betriebszeiten des Heizwiderstandes, die kleiner als eine den abgeschlossenen Temperaturausgleich zwischen Widerstand (Heizwiderstand) und Temperatursensor kennzeichnenden Aufheizzeit ist, ein bewerteter Korrekturwert verwendet wird. Ferner ist es vorteilhaft für ohne Fluidströmung vorliegende Betriebszeiten des Heizwiderstands den Korrekturwert in Abhängigkeit der Umgebungstemperatur, insbesondere der Temperatur der Brennkraftmaschine, einer Kennlinie oder einem gespeicherten Datenkennfeld zu entnehmen, wobei für Betriebszeiten die größer oder gleich der Aufheizzeit sind, der Kennlinien- oder Datenkennfeldwert den Korrekturwert bildet und für Betriebszeiten, die kleiner als die Aufheizzeit sind, der bewertete Korrekturwert gilt. Zur Ermittlung des bewerteten Korrekturwertes wird der zugeordnete Korrekturwert (Ausgangskorrekturwert) zeitabhängig verändert. Dies erfolgt insbesondere stufenförmig, das heißt, es handelt sich um eine Treppenfunktion. Alternativ ist es jedoch auch möglich, daß eine lineare Absteuerung des Korrekturwertes bzw. des bewerteten Korrekturwerts erfolgt. Ferner ist es auch denkbar, den Korrekturwert bzw. den bewerteten Korrekturwert zur Absteuerung über ein Tiefpaß, insbesondere über einen Tiefpaß erster Ordnung, zu führen.

Sobald im laufenden Betrieb stationäre Zustände vorliegen, muß eine Korrektur des Meßwertes entfallen. Dies erfolgt vorzugsweise dadurch, daß der Korrekturwert bzw. der bewertete Korrekturwert nach dem Beginn der Fluiddurchsatzmessung durch eine wählbare Absteuer-Zeitkonstante abgesteuert wird.

Die Absteuer-Zeitkonstante ist abhängig von der Größe des bewerteten Korrekturwerts zu Beginn des Absteuerns. Weiterhin beeinflußt im laufenden Betrieb die Größe des Fluiddurchsatzes die AbsteuerZeitkonstante mit der der Korrekturfaktor gesteuert wird. Die Nichtberücksichtigung erfolgt vorzugsweise nicht schlagartig, sondern es ist insbesondere vorgesehen, daß eine Absteuerung des Korrekturwertes bzw. des bewerteten Korrekturwertes durch sein schrittweises oder kontinuierliches Verkleinern erfolgt.

Zeichnung

Die Erfindung wird im folgenden anhand der Figuren näher erläutert. Es zeigen:

Figur 1    eine schematische Darstellung des Aufbaus eines Heißfilm-Luftmassenmessers,
Figur 2    eine Kennlinie,
Figur 3    einen Verlauf eines bestimmten Korrekturwertes in Abhängigkeit von der Betriebszeit eines Heizwiderstandes des Heißfilm-Luftmassenmessers,

Figur 4    ein Diagramm, das die stufenförmige Absteuerung des Korrekturwertes nach dem Beginn der Fluiddurchsatzmessung zeigt und

Figur 5    eine Gesamtkennlinie, die sich aus den Kennlinienverläufen der Figuren 3 und 4 zusammensetzt.

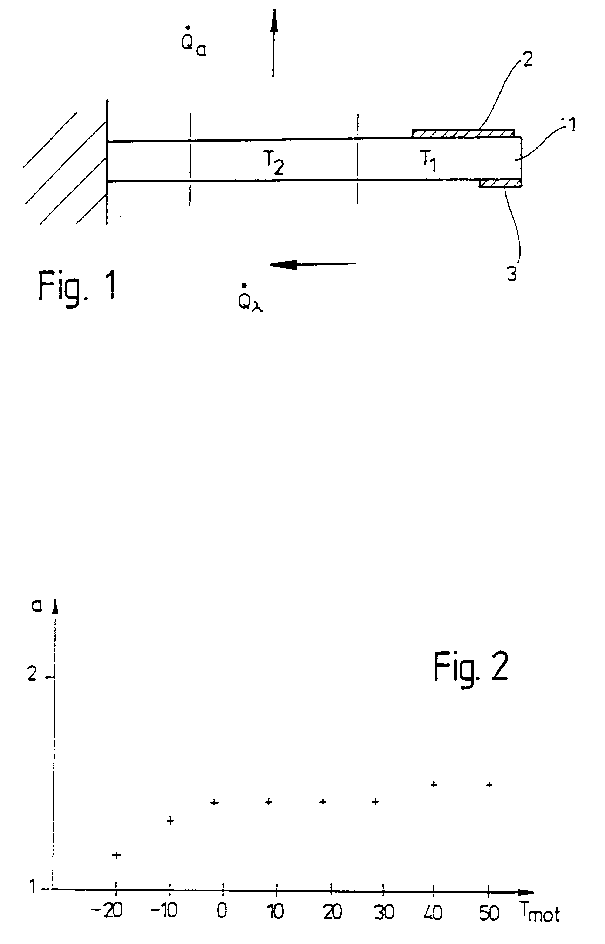

Die Figur 1 zeigt eine Sensorplatte 1 eines Heißfilm-Luftmassenmessers. An der Sensorplatte 1 ist ein temperaturabhängiger, von einem Heizstrom durchflossener Widerstand 2 angeordnet. Der Widerstand 2 befindet sich auf einer Seite der Sensorplatte 1. Auf der anderen Seite der Sensorplatte 1 liegt ein Temperatursensor 3. Die Sensorplatte 1 ist in einem Fluidströmungsweg angeordnet. Dies ist im hier vorliegenden Ausführungsbeispiel das Ansaugrohr einer Brennkraftmaschine. Mit dem Heißfilm-Luftmassenmesser kann somit die der Brennkraftmaschine zugeführte Luftmasse pro Zeiteinheit bestimmt werden. Die Temperaturverteilung der Sensorplatte 1 ändert sich mit Beginn der Anströmung nach dem Aufheizen bei ruhender Luftströmung. Die Aufheizung, also die Erwärmung des Widerstandes 2 durch den Heizstrom erfolgt bereits nach Einschalten der Zündung, während die Luftströmung erst zu einem späteren Zeitpunkt, nämlich nach dem Anspringen der Brennkraftmaschine einsetzt. Quer zur Sensorplatte 2 liegt der Wärmeübergang $\dot{Q}_\alpha$ vor. In Richtung der Sensorplatte 1 ergibt sich der Wärmeübergang $\dot{Q}_\lambda$. Es sei angenommen, daß im Bereich des Widerstands 2 bzw. des Temperatursensors 3 die Temperatur $T_1$ und -beabstandet davon- die Temperatur $T_2$ vorliegt.

Im stationären Betrieb bei ruhender Luft ist der Wärmeübergang $\dot{Q}_\alpha$ relativ gering. Dies gilt auch für den Wärmeübergang $\dot{Q}_\lambda$. Mithin ist die Temperatur $T_2$ proportional zur Temperatur $T_1$. Bei strömender Luft ist im stationären Zustand der Wärmeübergang $\dot{Q}_\alpha$ relativ groß; dies gilt auch für den Wärmeübergang $\dot{Q}_\lambda$. Hierdurch stellt sich im Betrieb bei ruhender Luft eine größere Temperatur $T_2$ gegenüber dem Betrieb mit strömender Luft ein. Betrachtet man nun den Zeitpunkt des Beginns der Anströmung, also die Zeit nach dem Anspringen der Brennkraftmaschine, so nimmt die Temperatur $T_2$ ab, wodurch die Heizleistung geringer als im zuvor vorliegenden Betrieb ist. Dies führt zu einem Meßfehler, der maximal etwa -20% betragen kann. Nach einer gewissen Zeit (ca. 15 Sekunden) ist dieser Fehler jedoch wieder ausgeglichen. Insgesamt läßt sich jedoch feststellen, daß dieser Meßfehler nicht zu einer optimalen Betriebsführung der Brennkraftmaschine führen kann. Erfindungsgemäß ist daher vorgesehen, den Meßfehler auszugleichen. Hierzu wird wie folgt vorgegangen:

In Abhängigkeit von der Temperatur $T_{mot}$ der Brennkraftmaschine wird im Zuge einer selbsttätig erfolgenden Fehlerkorrektur einer Kennlinie ein Wert a entnommen. Bei diesem Wert a handelt es sich um eine Größe zur maximal erforderlichen Korrektur des Meßwertes des Heißfilm-Luftmassenmessers nach entsprechend langer Aufheizzeit des Heizwiderstandes, ohne daß eine Luftströmung vorliegt.

Grundsätzlich ist zunächst anzumerken, daß eine Meßwertkorrektur nur dann erfolgt, wenn seit dem Einschalten der Zündung und dem Start der Brennkraftmaschine eine Mindestzeit $t_{min}$ vergangen ist. Die Minderheit $t_{min}$ kann jedoch auch den Wert "0" annehmen. Ist eine maximale Zeit verstrichen, bei der die Betriebszeit des Heizwiderstandes größer als dessen Aufheizzeit $t_A$ ist, so wird der Wert a aus der Kennlinie der Figur 2 als Korrekturwert k verwendet. Es gilt dann die Beziehung:

$$\dot{m}_{korr} = k * \dot{m}_{gemessen},$$

wobei $\dot{m}_{korr}$ der korrigierte Luftmassendurchsatz und $\dot{m}_{gemessen}$ der gemessene Luftmassendurchsatz ist.

Für alle Zeiten, die größer als die Mindestzeit $t_{min}$ aber kleiner als oder gleich groß wie die maximale Zeit (Aufheizzeit $t_A$) sind, werden als Korrekturwerte bewertete Korrekturwerte k' verwendet. Hierbei wird angenommen, daß die Aufheizzeit $t_A$ der Sensorplatte 1 einen linearen und/oder durch einen Tiefpaß geprägten Ausgleichsvorgang der Temperaturverteilung zur Folge hat, der nach Ablauf der Aufheizzeit $t_A$ abgeschlossen ist. Bei Verwendung einer zweiten Korrekturfunktion kann beim Auf-/Absteuern das Tiefpaßverhalten berücksichtigt werden. Die Absteuer-Zeitkonstante kann abhängig von der Größe des Fluiddurchsatzes sein. Ferner ist es alternativ oder zusätzlich auch möglich, daß die Absteuer-Zeitkonstante von der Größe, das heißt der Anfangsgröße, des Korrekturwerts bzw. bewerteten Korrekturwerts abhängig ist. Zur Berechnung des für die Korrektur anzusetzenden aktuellen, bewerteten Korrekturwerts k' gilt die Gleichung:

$$k' (i) = k (i - 1) + 1/256,$$

wobei ein Zeitabstand $i = b * 20{,}48$ ms verwendet wird. Dabei ist b der Anfangswert eines Zeitzählers mit einer Quantisierung von 20,48 ms. Der Anfangswert b berechnet sich nach der Beziehung

$$b = \frac{t_A}{a (T_{mot})}$$

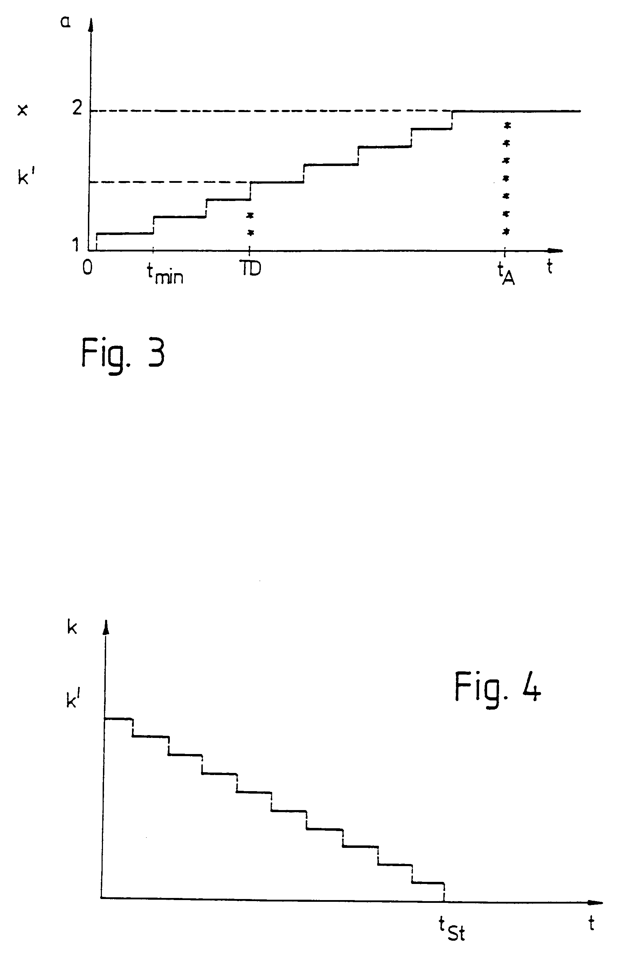

Der vorstehende Sachverhalt geht aus der Figur 3 hervor. Mit x ist dort ein Korrekturwert (k) dargestellt, der für eine bestimmte Temperatur der Brennkraftmaschine gilt (der Wert x resultiert also aus der Kennlinie der Figur 2). Auf der Zeitachse t des Diagramms der Figur 3 ist die Aufheizzeit $t_A$ abgetragen. Im Zeitpunkt $t_A$ ist die Aufheizzeit abgelaufen, hier gilt also der Wert x, das heißt, der für diesen Betriebspunkt maximale Korrekturwert k. Für Zeiten zwischen der Mindestzeit $t_{min}$ und der Aufheizzeit $t_A$ kommt ein momentan gültiger Korrekturwert, nämlich der bewertete Korrekturwert k' zum Einsatz. Dies ergibt sich aus dem stufenförmigen Verlauf der Kennlinie der Figur 3. Je nach Zeitpunkt des Motorstarts ergibt sich -gemäß der Treppenfunktion- ein entsprechend zugehöriger, bewerteter Korrekturwert k'. Der zum Einsatz gelangende Korrekturwert k' ist derjenige, der im Anspringzeitpunkt der Brennkraftmaschine vorliegt, das heißt, in dem Zeitpunkt, in dem die Luftströmung einsetzt. Dieser ist in der Figur 3 mit TD gekennzeichnet.

Ist der Meßbetrieb aufgenommen, das heißt, die Brennkraftmaschine befindet sich im Betrieb, so daß eine Luftströmung vorliegt, so stellt sich ein stationärer Zustand bei der Temperaturverteilung ein, so daß der Korrekturwert nicht mehr berücksichtigt werden darf. Hierzu wird dieser vorzugsweise schrittweise verkleinert, bis er den Wert "1" annimmt. Es erfolgt also eine Absteuerung. Diese ist vorzugsweise nach der Beziehung:

$$k'(i) = k(i - 1) - 1/256$$

vorgesehen. Der Anfangswert des Zeitzählers i hat dabei die Quantisierung 20,48 ms und er berechnet sich nach der Beziehung:

$$b = \frac{t_{St}}{k'\ (bzw.\ k)}$$

Hierbei bedeutet $t_{St}$ eine wählbare Zeit, innerhalb der die Absteuerung bis auf den Wert "1" vorgenommen werden soll.

Aus der Figur 4 ist ersichtlich, daß der momentan geltende bewertete Korrekturwert k' innerhalb der Absteuerzeit $t_{St}$ stufenweise jeweils um die gleichen Beträge bis auf den Wert "1" abgesteuert wird.

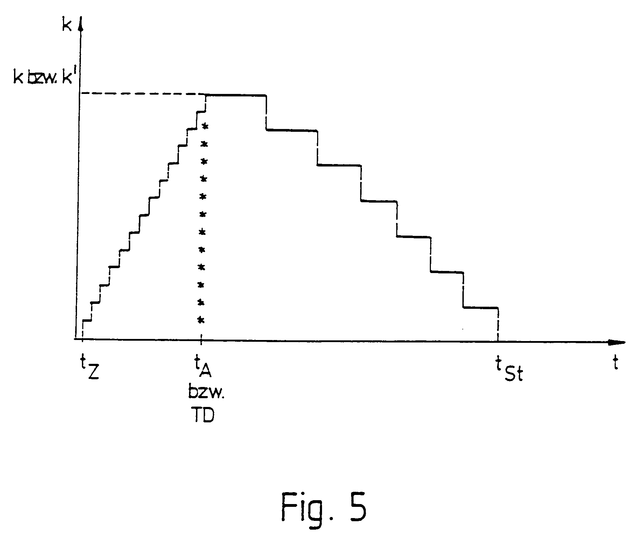

Aus der Figur 5 ist der gesamte Kennlinienverlauf der Figuren 3 und 4 nochmals dargestellt. Zum Zeitpunkt $t_z$ wird die Zündung eingeschaltet. Von dort aus erfolgen stufenweise der Anstieg bis zur dem Betriebszustand entsprechenden Größe des Korrekturwertes k bzw. bewerteten Korrekturwertes k'. Zum Zeitpunkt $t_A$ ist der maximale Korrekturwert erreicht, oder -sofern die Aufheizzeit noch nicht abgelaufen ist, liegt dort der Zeitpunkt TD vor, das heißt, hier beginnt die Luftströmung. Anschließend erfolgt dann ein stufenweises Absteuern des Korrekturwertes k bzw. bewerteten Korrekturwertes k'. Zum Zeitpunkt $t_{St}$ ist diese Absteuerung abgeschlossen.

**Patentansprüche**

1. Verfahren zur Bestimmung des Durchsatzes eines Fluids, insbesondere eines Luftmassenstroms einer Brennkraftmaschine, wobei ein temperaturabhängiger, von einem Heizstrom durchflossener Widerstand in dem Fluidströmungsweg angeordnet wird, die Größe des Heizstroms ein Maß für den Fluiddurchsatz ist und die Temperatur des Widerstands von einem Temperatursensor ermittelt und mittels einer den Heizstrom beeinflussenden Schaltungsanordnung auf einen konstanten Wert eingestellt wird, **dadurch gekennzeichnet,** daß zum Ausgleich eines bei eingeschaltetem Heizstrom jedoch noch nicht strömendem Fluid durch Temperaturabweichung, insbesondere Temperaturüberhöhung, des Widerstands auftretenden Meßfehlers der unmittelbar nach Beginn der Fluidströmung ermittelte Fluiddurchsatz mittels eines Korrekturwerts (k,k') berichtigt wird.

2. Verfahren nach Anspruch 1, **dadurch gekennzeichnet,** daß als Korrekturwert (k,k') ein Korrekturfaktor verwendet wird und daß mit diesem Korrekturfaktor der gemessene Fluiddurchsatz zum Erhalt eines korrigierten Fluiddurchsatzes multipliziert wird.

3. Verfahren nach einem der vorhergehenden Ansprüche, **dadurch gekennzeichnet,** daß die Korrektur bei nicht vorliegender Fluidströmung nur dann erfolgt, wenn nach dem Einschalten des Heizstroms eine vorgegebene Mindestzeit ($t_{min}$) vergangen ist.

4. Verfahren nach einem der vorhergehenden Ansprüche, **dadurch gekennzeichnet,** daß der Korrekturwert (k,k') von der ohne Fluidströmung vergehenden Betriebszeit des Heizwiderstandes abhängig ist.

5. Verfahren nach einem der vorhergehenden Ansprüche, **dadurch gekennzeichnet,** daß für ohne Fluidströmung vorliegende Betriebszeiten des Heizwiderstandes, die kleiner als eine den abgeschlossenen Temperaturausgleich zwischen Heizwiderstand und Temperatursensor kennzeichnenden Aufheizzeit ($t_A$) ist, ein bewerteter Korrekturwert (k') verwendet wird.

6. Verfahren nach einem der vorhergehenden Ansprüche, **dadurch gekennzeichnet,** daß für ohne Fluidströmung vorliegende Betriebszeiten des Heizwiderstandes der Korrekturwert (k bzw. k') in Abhängigkeit der Umgebungstemperatur, insbesondere der Temperatur der Brennkraftmaschine ($T_{mot}$), einer Kennlinie bzw. einem Datenkennfeld entnommen wird, wobei für Betriebszeiten, die größer oder gleich der Aufheizzeit ($t_A$) sind, der Kennlinien- oder Datenkennfeldwert den Korrekturwert (k) bildet und für Betriebszeiten, die kleiner als die Aufheizzeit ($t_A$) sind, der bewertete Korrekturwert (k') gilt.

7. Verfahren nach einem der vorhergehenden Ansprüche, **dadurch gekennzeichnet,** daß zur Ermittlung des bewerteten Korrekturwertes (k') der zugeordnete Korrekturwert (k) einer zeitabhängigen Veränderung unterliegt.

8. Verfahren nach einem der vorhergehenden Ansprüche, **dadurch gekennzeichnet,** daß der Korrekturwert (k) bzw. der bewertete Korrekturwert (k') nach dem Beginn der Fluiddurchsatzmessung nach Ablauf einer wählbaren Absteuerzeit ($t_{ST}$) nicht mehr berücksichtigt wird.

9. Verfahren nach einem der vorhergehenden Ansprüche, **dadurch gekennzeichnet,** daß der Korrekturwert (k) bzw. der bewertete Korrekturwert (k') zur Absteuerung über einem Tiefpaß, insbesondere über einen Tiefpaß erster Ordnung, geführt wird.

10. Verfahren nach einem der vorhergehenden Ansprüche, **dadurch gekennzeichnet,** daß der Korrekturwert (k) bzw. der bewertete Korrekturwert (k') linear während der Absteuerzeit ($t_{ST}$) abgesteuert wird.

11. Verfahren nach einem der vorhergehenden Ansprüche, **dadurch gekennzeichnet,** daß eine Absteuerung des Korrekturwertes (k) bzw. des bewerteten Korrekturwertes (k') durch sein schrittweises oder kontinuierliches Verkleinern erfolgt.

12. Verfahren nach einem der Ansprüche 7 bis 11, **dadurch gekennzeichnet,** daß die Absteuer-Zeitkonstante von der Anfangsgröße des Korrekturwerts (k bzw. k') abhängig ist.

13. Verfahren nach einem der Ansprüche 7 bis 12, **dadurch gekennzeichnet,** daß die Absteuer-Zeitkonstante von der Größe des Fluiddurchsatzes abhängig ist.

## Claims

1. Process for determining the flow rate of a fluid, in particular of an air flow of an internal combustion engine, a temperature-dependent resistor through which a heating current flows being arranged in the flow path of the fluid, the size of the heating current being a measure of the fluid flow rate and the temperature of the resistor being determined by a temperature sensor and being set to a constant value by means of a circuit arrangement which influences the heating current, characterised in that the fluid flow rate determined immediately after the start of the fluid flow is corrected by means of a correction value (k, k') in order to compensate a measurement error which occurs when the heating current is switched on but when fluid is not yet flowing due to temperature deviation, in particular excessive temperature increase of the resistor.

2. Process according to Claim 1, characterised in that a correction factor is used as correction value (k, k') and in that the measured fluid flow rate is multiplied by this correction factor in order to obtain a corrected fluid flow rate.

3. Process according to one of the preceding claims, characterised in that when there is no flow of fluid the correction only occurs when a predetermined minimum time ($t_{min}$) has passed after the heating current has been switched on.

4. Process according to one of the preceding claims, characterised in that the correction value (k, k') is dependent on the operating time of the heating resistor which passes without a flow of fluid.

5. Process according to one of the preceding claims, characterised in that an evaluated correction value (k') is used for operating times of the heating resistor which are present without a flow of fluid and which are smaller than a heating-up time ($t_A$) which characterises the completed temperature compensation between heating resistor and temperature sensor.

6. Process according to one of the preceding claims, characterised in that the correction value (k or k') is obtained from a characteristic line or a family of characteristic data lines as a function of the ambient temperature, in particular of the temperature of the internal combustion engine ($t_{mot}$) for operating times of the heating resistor which occur without a flow of fluid, the value of the characteristic line or family of characteristic data lines forming the correction value (k) for operating times which are greater than or equal to the heating-up time ($T_A$) and the evaluated correction value (k') applying for operating times which are smaller than the heating-up time ($t_A$).

7. Process according to one of the preceding claims, characterised in that the assigned correction value (k) is subjected to a time-dependent modification in order to obtain the evaluated correction value (k').

8. Process according to one of the preceding claims, characterised in that the correction value (k) or the evaluated correction value (k') is no longer taken into account after the start of the measurement of the fluid flow rate after a selectable notching-down time ($t_{St}$) has elapsed.

9. Process according to one of the preceding claims, characterised in that the correction value (k) or the evaluated correction value (k') is connected via a low-pass filter, in particular via a low-pass filter of the first order, for the purpose of notching-down.

10. Process according to one of the preceding claims, characterised in that the correction value (k) or the evaluated correction value (k') is notched down linearly during the notching-down time ($t_{St}$).

11. Process according to one of the preceding claims, characterised in that notching-down of the correction value (k) or of the evaluated correction value (k') takes place by means of its incremental or continuous reduction.

12. Process according to one of Claims 7 to 11, characterised in that the notching-down time constant is dependent on the initial size of the correction value (k or k').

13. Process according to one of Claims 7 to 12, characterised in that the notching-down time constant is dependent on the size of the fluid flow rate.


## Revendications

1. Procédé servant à déterminer le débit d'un fluide, en particulier le débit d'air dans un moteur à combustion interne, utilisant une résistance variante avec la température, placée dans le courant fluide, la grandeur du courant de chauffage constituant une mesure du débit de fluide tandis que la température de la résistance est fournie par un détecteur thermique et maintenue, par l'intermédiaire d'un circuit agissant sur le courant électrique de chauffage, à une valeur constante, caractérisé en ce que lorsqu'on établit le courant de chauffage alors que le fluide ne circule pas encore, pour compenser l'erreur de mesure due à la variation, en particulier l'élévation, de la température de la résistance, on corrige le débit de fluide indiqué directement après le début de son écoulement au moyen d'une valeur de correction (K, K').

2. Procédé selon la revendication 1, caractérisé en ce qu'on utilise, comme valeur de correction (K, K') un facteur correcteur par lequel on multiplie le débit de fluide mesuré pour obtenir un débit corrigé.

3. Procédé selon une des revendications précédentes, caractérisé en ce que la correction, tant qu'il n'y a pas d'écoulement de fluide, ne démarre qu'au bout d'un temps minimal ($t_{min}$), après l'établissement du courant de chauffage.

4. Procédé selon une des revendications précédentes, caractérisé en ce que la valeur de correction (K, K') dépend du temps de fonctionnement de la résistance chauffante en l'absence d'écoulement fluide.

5. Procédé selon une des revendications précédentes, caractérisé pour des temps de fonctionnement de la résistance chauffante en l'absence d'écoulement fluide, inférieurs à un temps d'échauffement ($t_A$) caractérisant l'aboutissement de l'égalisation des températures de la résistance chauffante et du détecteur de température, on utilise un facteur de correction (K') pondéré.

6. Procédé selon une des revendications précédentes, caractérisé en ce que pour des temps de fonctionnement de la résistance chauffante en l'absence d'écoulement fluide, le facteur de correction (K ou K') en fonction de la température ambiante, en particulier du moteur à combustion interne ($T_{mot}$), est pris sur une courbe ou dans un champ de caractéristiques en fonction de la température, de sorte que pour des temps de fonctionnement supérieurs ou égaux au temps d'échauffement ($t_A$), la valeur de correction (K) est donnée par les courbes ou champs de caractéristiques tandis que pour les temps de fonctionnement inférieurs au temps d'échauffement ($t_A$), on utilise la valeur de correction pondérée (K').

7. Procédé selon une des revendications précédentes, caractérisé en ce que pour obtenir la valeur de correction pondérée (K'), on fait varier la valeur associée (K) en fonction du temps.

8. Procédé selon une des revendications précédentes, caractérisé en ce que la valeur de correction (K) ou la valeur de correction pondérée (K') n'est plus prise en considération au bout d'un certain délai d'effacement ($t_{St}$) compté à partir du début de la mesure du débit de fluide.

9. Procédé selon une des revendications précédentes, caractérisé en ce que la valeur de correction (K) ou la valeur de correction pondérée (K') est conduite à son effacement par l'intermédiaire d'un passe-bas, en particulier un passe-bas du premier ordre.

10. Procédé selon une des revendications précédentes, caractérisé en ce que la valeur de correction (K) ou la valeur de correction pondérée (K') est conduite à son effacement, de façon linéaire, pendant le délai d'effacement ($t_{St}$).

11. Procédé selon une des revendications précédentes, caractérisé en ce que l'effacement de la valeur de correction (K) ou de la valeur de correction pondérée (K') s'effectue par diminution de sa valeur, pas à pas ou en continu.

12. Procédé selon une des revendications 7 à 11, caractérisé en ce que la constante de temps d'effacement dépend de la grandeur initiale de la valeur de correction (K ou K').

13. Procédé selon une des revendications 7 à 12, caractérisé en ce que la constante de temps d'effacement dépend de la grandeur du débit de fluide.

Fig. 1

Fig. 2

Fig. 3

Fig. 4

Fig. 5